# EUROPÄISCHE PATENTSCHRIFT

(11) **EP 2 179 230 B1**
(45) Veröffentlichungstag und Bekanntmachung des Hinweises auf die Patenterteilung: **06.08.2014**
(21) Anmeldenummer: 08801340.4
(22) Anmeldetag: 22.09.2008
(51) Int. Cl.: F24J 3/08

(54) **BRUNNEN ZUR GEWINNUNG VON ENERGIE**
WELL FOR COLLECTING ENERGY
PUITS DE PRODUCTION D'ÉNERGIE

(30) Priorität: 28.09.2007 DE 102007047551
(43) Veröffentlichungstag der Anmeldung: 28.04.2010
(73) Patentinhaber: Geo-en Energy Technologies Gmbh, 12159 Berlin (DE)
(72) Erfinder: VIERNICKEL, Michael, 12107 Berlin (DE)
(74) Vertreter: Boeckh, Tobias
(86) Internationale Anmeldenummer: PCT/DE2008/001578
(87) Internationale Veröffentlichungsnummer: WO 2009/039840

(56) Entgegenhaltungen:
- DE-A1-102004 023 428
- DE-A1-102005 045 807
- JP-A- 58 024 762
- JP-A- 2000 240 029
- US-A- 2 905 245
- US-A- 3 062 289
- US-A- 3 938 592
- US-A- 4 047 093
- US-A- 4 448 237
- US-A- 4 452 303
- US-A- 4 694 905
- US-A1- 2003 010 652

## Beschreibung

Die Erfindung betrifft eine Anlage zur Nutzung von Erdwärme und die Verwendung dieser Anlage zur Zu- oder Abfuhr von Wärme und/oder zur Stromgewinnung.

Die Nutzung von Erdwärme wird den regenerativen Energien zugeordnet. Mit zunehmender Tiefe steigt die Temperatur im Erdreich an. Dieser Temperaturanstieg ist unterhalb 20 Metern nicht mehr von den Jahreszeiten oder dem Klima abhängig, sondem hängt im Wesentlichen von den geologischen und geothermischen Bedingungen ab. Aus diesem Grund bietet sich in vielen Regionen die Nutzung der Erdwärme zur Energiegewinnung an, da so eine emissionsneutrale, insbesondere im Hinblick auf CO₂-Emissionen, und ungefährliche Energiegewinnung möglich ist.

Aus dem Stand der Technik sind verschiedene Anlagen und Verfahren zur Nutzung von Erdwärme bekannt. Die wohl am meisten verbreitete Nutzungsmethode ist eine Erdwärmesonde, wie sie in der DE 29 35 832 A1 offenbart wird. Dabei wird in eine Bohrung im Erdreich ein U-Rohr eingebracht. In dem Rohr zirkulierende Flüssigkeit nimmt in der Tiefe Wärme aus der Umgebung auf, welche dann genutzt wird. Zur Unterstützung der Zirkulation ist eine Pumpe vorgesehen. Nachteilig an dieser Lösung ist, dass die Effizienz und Leistungsfähigkeit der Anlage konstruktionsbedingt eingeschränkt ist.

Grundwasser bietet eine weitere Möglichkeit Erdwärme zu nutzen. Dabei wird Grundwasser durch einen Förderbrunnen an die Oberfläche gefördert, wo diesem mittels einer Wärmepumpe die Wärme entzogen wird. Anschließend wird das Wasser durch einen Injektionsbrunnen wieder in den Grundwasserleiter zurückgespeist. Nachteilig an dieser Lösung ist, dass für die Förderung von Grundwasser eine Genehmigung erforderlich ist, dafür Gebühren zu entrichten sind, die Wiedereinleitung überwachungspflichtig ist und jeweils Grundwasserspiegelabsenkungen oder - anhebungen resultieren. Die chemischen und physikalischen Parameter des aus dem Förderbrunnen entnommenen Wassers unterscheiden sich häufig bereits von dem Wasser in den wenige Meter entfernt liegenden Injektionsbrunnen dergestalt, dass sich chemische und Ausfällreaktionen abspielen die den Brunnen langfristig verstopfen. Zusätzlich ist durch die beim Übertagepumpen auftretenden Druckdifferenzen das Risiko der Ausgasung gelöster Gase und der damit verbundenen Ausfällreaktionen gegeben.

Die EP 0 386176 B1 offenbart eine Anlage zum Austausch von Energie zwischen Erdreich und einem Energietauscher über eine Kombination einer Vorlaufleitung mit einer Pumpe im Bohrloch und einer Rücklaufleitung. Das Bohrloch ist mit einer porösen Füllung versehen und es wird durch das Vorlaufrohr Wasser in das Bohrloch eingebracht, welches durch die poröse Verfüllung zu den Rücklaufleitungen gelangt. Die Rücklaufleitungen sind mit einer Kombination von Querverschlüssen und Durchtrittsöffnungen in Richtung der porösen Verfüllung versehen, so dass das Wasser bei der Förderung an die Erdoberfläche immer wieder die Rücklaufleitung verlassen muss. Durch diese besondere Ausgestaltung der Rücklaufrohre soll die Wärmeaufnahme des Wassers gesteigert werden. Nachteilig an dieser Lösung ist, dass diese nur über große Längen mit ausreichender Effizienz einsetzbar ist.

In der EP 0 755 497 B1 wird eine Anlage zur Gewinnung von Erdwärme offenbart, bei der im Außenbereich des Bohrloches Wasser bis zum Grund der Bohrung eingebracht wird. In einem definierten Abstand zum Grund der Bohrung ist ein Trennrohr angeordnet, welches im unteren Bereich eine Pumpe aufweist, die zur Förderung von Wasser an die Erdoberfläche vorgesehen ist. Der Bereich der Bohrung zwischen Austrittsöffnung der Wasser zuführenden Rohre und der seitliche Öffnung des Trennrohres ist mit einer porösen Füllung versehen. Auch wenn durch die erfindungsgemäßen Maßnahmen der EP 0 755 497 B1 bevorzugt erwärmtes Wasser aus dem unteren Bereich der Bohrung aufgenommen werden soll, so ist es nachteilig, dass zwischen zuführendem und abführenden Rohr eine hydraulische Verbindung besteht, wodurch bevorzugt das kalte Wasser zu Tage gefördert wird, welches zuvor in das Bohrloch eingeleitet wurde. Dadurch wird die Effizienz erheblich gesenkt.

Weitere Anlagen sind im Stand der Technik in der EP 1 388 717, JP 58024762, DE 10 5005 045807, US 3,938,592, DE 20 2004 016 998, DE 2850865 und in der CH 653120 beschrieben.

Die EP 1 388 717 offenbart eine Anlage zur Nutzung von Erdwärme mit einem Hauptrohr, das mit einem Querverschluss in einen oberen und einen unteren Teil unterteilt ist. Das Rohr weist Durchtrittsöffnungen zur Umgebung auf. Innerhalb des Rohres ist eine Pumpe angeordnet, die das Grundwasser durch Wärmetauscherrohre nach oben befördert. Für die Zirkulation eines Wärmeträgers sind Rohre innerhalb des Hauptrohres angeordnet. Diese Erfindung bedarf großen Bohrkalibers und bietet keine elastische und hydraulisch vorteilhafte Einbettung in poröses Material.

Die JP 58024762 beschreibt eine Methode zur Abfuhr von Erdwärme mit einem Hauptrohr, das oberhalb und unterhalb eines Querverschlusses mit Durchtrittsöffnungen ausgestattet ist. Dabei ist die Entnahme aus einer Grundwasser führenden Schicht und Einleitung in einen hydraulisch getrennten anderen Grundwasserleiter als wesentlich und grundsätzlich notwendig dargestellt. Hierdurch kommt es zu einer Vermischung verschiedener Grundwässer, die in der Regel verschiedene chemische und physikalische Wasserbeschaffenheit haben, z.B. Süßwasser und Salzwasser führen, was zu Ausfällreaktionen und der langfristigen Verstopfung der Brunnenfilterstrecken führen kann. Auch ist in den meisten Gebieten aus Gründen des Grundwasserschutzes eine Vermischung verschiedener Grundwässer nicht gestattet, in Gebieten mit Grundwassemutzung zur Trinkwassergewinnung ist die Verwendung der bekannten Vorrichtung problematisch.

Die US 3 938 592 offenbart eine Anlage zur Nutzung von Erdwärme mit einem Hauptrohr, das durch einen Querverschluss, in dem eine Pumpe angeordnet ist, unterteilt ist. Oberhalb des Querverschlusses ist ein U-förmiges Wasseraustauschrohr für die Zirkulation eines Wärmeträgers beschrieben, wobei das Hauptrohr von einer porösen Schüttung umgeben ist. Die Installation erfordert größere untertägige Hohlräume durch mehrfache Bohrungen oder Sprengungen, daher im Lockergestein in der Regel wegen der Instabilität des Untergrundes nicht einsetzbar.

Die Offenbarungen DE 20 2004 016 998, DE 2850865 und CH 653120 beschreiben Vornichtungen zur Nutzung von Erdwärme mit einem Wärmeüberträger zur direkten Verdampfung eines flüssigen Kältemittels oder aber sie offenbaren Haupt- oder Wärmeaustauscherrohre aus PVC bzw. Polyethylen. Die untertägigen geschlossenen Wärmetauscherflächen werden infolge der allenfalls sehr langsamen Grundwasseranströmung nahezu auf dem Niveau reiner (konduktiver) Wärmeleitung geringe Übertragungsleistungen ermöglichen.

Bei den aus dem Stand der Technik bekannten Lösungen werden bevorzugt getrennte Rohre im Bohrloch zur Förderung und Rückleitung des Grundwassers verwendet sowie ein getrennter Wärmetauscher als separate Anlage. Dies macht die aus dem Stand der Technik bekannten Anlagen aufwendig und verursacht dadurch hohe Kosten, weil größere Bohrkaliber erforcferlich sind.

Insbesondere sind im Stand der Technik die Probleme der Dichtung bzw. der Wechselwirkung des Hauptrohrs mit dem umgebenden Erdreich nicht gelöst, so dass die Anlagen des Standes der Technik nicht ausreichend effizient arbeiten.

Aufgabe der Erfindung war es daher, eine Anlage zur Verfügung zu stellen, die die Nachteile des Standes der Technik nicht aufweist und die eine effiziente Nutzung der Erdwärme ermöglicht Die erfindungsgemäße Aufgabe wird durch die Merkmale der Ansprüche gelöst, wobei sich vorteilhafte Ausführungsformen insbesondere aus den Unteransprüchen ergeben.

Das erfindungsgemäße Problem wird überraschend durch eine Anlage zur Nutzung von Erdwärme gelöst, welche umfassend ein Hauptrohr in einer Bohrung eines Brunnens, dadurch gekennzeichnet, dass das Durchtrittsöffnungen aufweisende bevorzugt zentral angeordnete Hauptrohr durch einen Querverschluss in einen oberen und einen unteren Teil unterteilt wird und der Querverschluss eine Öffnung aufweist, in der mindestens teilweise eine Vorrichtung, insbesondere eine Pumpe angeordnet ist, die eine Strömung auslöst und/oder unterstützt und das Hauptrohr bevorzugt mindestens im Bereich der Durchtrittsöffnungen, besonders bevorzugt vollständig von einer porösen Schüttung umgeben ist, welche den Hohlraum der Bohrung um das Hauptrohr ausfüllt und die poröse Schüttung durch ein dichtendes Material hydraulisch unterbrochen ist und im Ringraum zwischen dem Hauptrohr und der Bohrung wärmenutzende Vorrichtungen, bevorzugt Rohre, angeordnet sind, in denen ein Wärmeträger zirkuliert und die wärmenutzende Vorrichtung von der Erdoberfläche in die Schüttung verläuft, vorzugsweise durch quellende Tone, Zement oder andere, möglichst dauerplastische Materialien und das Hauptrohr in seinem oberen und unteren Teil Durchtrittsöffnungen aufweiset, welche den Einstrom von Grundwasser in das Hauptrohr und den Ausstrom des durch die Pumpe geförderten Grundwassers ermöglichen, so dass die Grundwasserströmung die wärmenutzenden Vorrichtungen umpsült. Bevorzugt ist die poröse Schüttung im Bereich des Querverschlusses hydraulisch durch dichtendes Material unterbrochen, vorzugsweise durch quellende Tone, Zement oder andere, möglichst dauerplastische Materialien und innerhalb der Schüttung, bevorzugt im Ringraum zwischen Hauptrohr und Bohrung, Rohre angeordnet sind, in denen ein Wärmeträger zirkuliert und die Rohre von der Erdoberfläche in die Schüttung verlaufen. In einer bevorzugten Ausführungsform ist vorgesehen, dass die Rohre mit dem Wärmeträger oberhalb der hydraulischen Dichtung der Schüttung angeordnet sind. Weiterhin kann es bevorzugt sein, dass die Rohre mit dem Wärmeträger durch das dichtende Material bis in den unterhalb des dichtenden Materials gelegenen Teil der porösen Schüttung hineinreichen. Es kann weiterhin bevorzugt sein, dass die Rohre mit dem Wärmeträger entlang der Außenwand des Hauptrohres angeordnet sind. Bevorzugt sind hierbei die Rohre kreisförmig entlang der Außenwand des Hauptrohres angeordnet. Diese Wärmetauscherrohre erhalten durch die Umflutung mit Grundwasser aus der Peripherie einen Wärmenachstrom.

Die Wärmetauscherrohre nur oberhalb der hydraulischen Sperrschicht der Ringraumverfüllung anzuordnen hat Vorteile beim Einbau und ermöglich dadurch Zeit- und Kostenerspamis. Die Ausführung der Wärmetauscherrohre bis zur Unterkante der unteren Filterstrecke bietet maximale Leistung durch die damit vergrößerte Oberfläche, hat aber auch eine Maximallänge, ab der eine weitere Verlängerung keine Vorteile mehr mit sich bringt.

Es war völlig überraschend, dass entgegen der Richtung der Entwicklung des Standes der Technik eine Vorrichtung zur Nutzung von Erdwärme besonders effizient eingesetzt werden kann, die keine hydraulisch getrennten wasserführenden Schichten bspw. mit verschiedenen Drücken oder verschiedenen Temperaturen nutzt. Es lag für den Fachmann nicht nahe, dass er mit der Wasserziriculation innerhalb eines Horizontes verbleiben' kann. Im Stand der Technik ging man bisher davon aus, dass es zu einem hydraulischen Kurzschluss käme, wenn man keine durch Grundwasserstauer hydraulisch getrennten Grundwässer nutzt. Grundwasserstauer sind im Sinne der Erfindung insbesondere Gesteinskörper oder Erdschichten mit einer niedrigen Wasserdurchlässigkeit und stauenden Eigenschaften im Verhältnis zum Grundwasser.

Zahlreiche Vorrichtungen des Standes der Technik sind deshalb auf hydraulisch getrennte wasserführende Schichten angewiesen. Durch den Einsatz der bekannten Vorrichtungen in solchen hydraulisch getrennten wasserführenden Schichten kommt es jedoch zu einer Mischung der chemisch differenten Wässer aus den verschiedenen Schichten, was zu chemischen Reaktionen und Ausfällungen führt.

Untersuchungen der Grundwasser führenden Schichten ergaben, dass die hydraulische Durchlässigkeit der aus Sanden und Kiesen bestehenden geologischen Formationen nicht in alle Richtungen gleichförmig ist. Vielmehr regelmäßig kommt es zu einer gerichteten Durchlässigkeit die in horizontaler Richtung um ein Vielfaches höher ist, als in vertikaler Richtung. Der Verlauf der hydraulischen Durchlässigkeit wird durch die Lagerung und Form der Sedimente gesteuert. Diese sind während der Entstehung dieser geologischen Formationen dergestalt absedimentiert oder geschwemmt worden, dass das Wasser vor allem im Wesentlichen parallel zum Boden bzw. zum Grundwasserspiegel fließt und ein Wasserverlauf in vertikaler Richtung ab- bzw. umgelenkt wird.

Diese Eigenschaft der Grundwasser führenden Sedimente kann man sich durch die beschriebene Technologie dergestalt zunutze machen, dass z.B. im unteren Teil dieser Formation Grundwasser abgepumpt wird und insbesondere in mehreren Metern Abstand darüber wieder reinjiziert wird. Zu beobachten ist dabei gemäß der erwähnten Durchlässigkeitsunterschiede, dass das Wasser nicht entsprechend der hierdurch hergestellten Druckdifferenzen den kürzesten Weg von oben nach unten nimmt, sondem einen weiten Umweg von einem Vielfachen der kürzesten Wegstrecke zirkulär um die Vorrichtung oder Anlage herum zurück legt Dabei wird ein großes Volumen des Grundwasserleiters durchströmt und dabei ein Wärmeaustausch ausgelöst, bevorzugt wenn das injizierte Wasser eine vom Grundwasser abweichende Temperatur hat. Durch Temperatur- und Leistungsmessungen sowie Markierungstechniken, sogenannten Tracerversuchen, konnten Gesetzmäßigkeiten über das Ausmaß der durch Anwendung dieser Technologie erreichbaren Wärmeaustauscherkapazität abgeleitet und für die Konstruktion solcher Anlagen nutzbar gemacht werden. Es konnte gezeigt werden, dass die im Wesentlichen vertikal aufgebauten Druckdifferenzen nahezu ausschließlich Wasserbewegungen zwischen den Förder- und Injektionsstrecken auslösen, eine Beeinflussung der Grundwasseroberfläche kaum eintritt und auch von lateral keine frischen Wässer involviert werden. Das zirkulierende Wasser verbleibt innerhalb des konstruktionsgemäß angesprochenen Grundwasserleiters, immer im selben Milieu, so dass keine chemischen Reaktionen oder physikalischen Beeinflussungen, z.B. durch pH-Wert-Verschiebungen zu befürchten sind. Darüber und/oder darunter liegende Grundwasserstauer führen zu einer weiteren Abgeschlossenheit dieses Kreislaufs. Vorteilhafterweise wird durch die Ausgestaltung der Förder- und Injektionsstrecken, die in Form von Durchbruchsöffnungen im Hauptrohr und die umgebende poröse Schüttung realisiert werden, bevorzugt die hydraulische Anbindung an den Grundwasserleiter bewerkstelligt. Hier wird durch Bemessung der Durchlässigkeit eine Anpassung an das umgebende Erdreich und Strömungssteuerung bewirkt. Diese führt zu Gleichförmigkeit der Strömung ohne Turbulenzen, insbesondere durch Einsatz von bevorzugten Glaskugeln als poröse Schüttung und strömungsoptimierter Durchbruchsöffnungen in Form von nach peripher sich weitenden Schlitzen vorzugsweise aus Edelstahl und der Anpassung der Öffnungen dergestalt, dass sich in gößerer Entfernung vom Querverschluss, sowohl in der Förder-, als auch der Injektionsstrecke eine höhere Durchlässigkeit ergibt. So wird der Druckaufbau zwischen Förder- und Injektionsstrecke in einer Form beeinflusst, der eine Weitläufigkeit der Vertikalströmung zusätzlich steigert.

Die erfindungsgemäße Anlage bzw. Vorrichtung weist vorzugsweise auf halber Höhe des mit Grundwasser gesättigten umgebenden Lockergesteins den o.g. Quenrerschluss auf. Selbstverständlich ist es auch möglich, dass der Querverschluss im unteren oder oberen Drittel, Viertel, Sechstel, Achtel oder völlig anders positioniert ist, das richtet sich insbesondere nach den hydraulischen Eigenschaften des mit Grundwasser gesättigten umgebenden Lockergesteins. Der Fachmann kann ohne selbst erfinderisch tätig zu werden die geeignete Positionierung mittels Auswertung der hydraulischen Eigenschaften des Lockersediments und Berücksichtigung bei thermohydraulischer numerischer (Strömungs-) Simulation feststellen. Es ist auch möglich, dass der Querverschluss ein um das Hauptrohr herum angeordneter oder das Hauptrohr durchgehender Materialblock ist. Wenn der Quenrerschluss außen um das Hauptrohr herumgeführt wird, weist das Hauptrohr im Inneren eine Vorrichtung oder Merkmale auf, die sicherstellen, dass das einströmende Grundwasser beispielsweise die Pumpe oder eine andere Vorrichtung, die eine Strömung initiiert oder bewirkt, passiert. Das dichtende Material und der Querverschluss sind demgemäß wirkverbunden, um ein gerichtetes Strömungsverhaften des unten in das Hauptrohr einströmenden Grundwassers sicherzustellen. Der Querverschluss und das dichtende Material kann im Sinne der Erfindung daher eine Einheit bilden oder aber aus zwei unterschiedlichen Elementen bestehen. Demgemäß wird vorteilhafterweise in einer Bohrung ein Hauptrohr eingebaut welches bevorzugt zentral in der Bohrung angeordnet ist und durch das dichtende Material und den Querverschluss zwei unterschiedliche Filterstrecken aufweist, die übereinander mit einem Abstand zueinander gelegen sind. Durch den unteren Teil des Rohres strömt Grundwasser durch die Durchtrittsöffnungen ein, welches im oberen Teil des Rohres, das heißt über dem dichtenden Material bzw. dem Querverschluss, in das Erdreich austritt. Durch die Kombination der erfindungsgemäßen Merkmale findet in einer besonders bevorzugten Ausführungsform der Erfindung keine Zutageförderung von Grundwasser statt und es treten nur sehr langsame Fließgeschwindigkeiten auf, so dass wenig bis gar keine Ausfällreaktionen stattfinden. So war es unter anderem überraschend, dass die poröse Schüttung in Kombination mit den anderen Merkmalen der Erfindung zu einer verbesserten Vorrichtung, beziehungsweise zu ihrer Verwendung zur Nutzung von Erdwärme führt. Die poröse Schüttung um das Hauptrohr führt zu optimiert langsamen, überwiegend laminaren Fließgeschwindigkeiten.

Die der vorgestellten technische Lehre bevorzugt zugrunde liegende moderne thermohydraulische Strömungssimulation in Form numerischer Computerprogramme dient bevorzugt der Dimensionierung der das Hauptrohr umgebenden porösen Schüttung und Anordnung der Durchtrittsöffnungen sowie deren Öffnungsflächen. Dadurch wird der hydraulische Anschluss an den Grundwasserhorizont für die beabsichtigte konzentrische Vertikalzirkulation innerhalb des Grundwasserhorizontes reguliert. Durch die entsprechend der Simulation abgestuften hydraulische Durchlässigkeit der porösen Schüttung und Rohröffnungen wird die Wassermenge auf den verschiedenen Ebenen derart eingestellt dass sich eine maximal weitläufige seitliche Durchströmung des Grundwasserleiters ergibt und damit gleichzeitig ein lokaler Druckausgleich, so dass kein Absenk-Trichter entsteht. Diese dadurch gestaltete Strömungssteuerung verhindert den sich sonst nahe der Sperrschicht einstellenden hydraulischen Kurzschluss, der die Leistung entsprechend dem bislang gültigen Stand der Technik erheblich herabsetzen würde. Gleichzeitig kann durch die Strömungssteuerung eine gleichmäßige Durchströmung über die gesamte Filterlänge gewährleistet werden, was für die Minimierung der auftretenden Geschwindigkeiten und der damit verbundenen Turbulenzen von entscheidender Bedeutung ist.

Durch diese erfindungsgemäßen Merkmale soll sicher gestellt werden, dass das zirkulierende Wasser ausreichend Zeit und Wegstrecke für größtmögliche Wärmeübertragung hat und gleichzeitig vorhandene Partikel nicht dazu führen, dass sich die Durchtrittsöffnungen zusetzen und so der Förderkreislauf unterbrochen wird. Im Übrigen gewährleistet die Ausgestaltung insbesondere der unteren Durchtrittsöffnungen als Filterstrecken zusätzlich, dass die im Hauptrohr angeordnete Pumpe nicht durch feste Bestandteile beschädigt wird.

Die Durchtrittsöffnungen der Filterstrecken sollen bevorzugt in Form einer quer verlaufenden Schlitzung gestaltet werden, diese von innen nach außen in der Öffnungsweite, bevorzugt 1 - 4mm, zunehmen, so dass sich über deren Tiefe keine relevante Strömungsbeschleunigung einstellt und im Fall einer Reinigungsmaßnahme von innen nach außen z.B. mit einem Wasserdruckstrahl die umgebende poröse Schüttung gut erreichbar ist. Diese kann beispielsweise durch die Schüttung von Filterkies oder anderer vorzugsweise runder Körper, deren Durchmesser, bevorzugt gemäß der thermohydraulischen numerischen Strömungssimulation auf das umgebende Lockergestein, die Filteröffnungen im Hauptrohr und die gewünschten hydraulischen Vorgänge abgestimmt sein müssen, geschehen.

Im Sinne der Erfindung ist es in dieser Ausführungsform besonders vorteilhaft, wenn der effektive Porenraum bzw. die hydraulische Durchlässigkeit im Bereich größer 30 % liegt und eine sehr hohe bis maximale Gleichförmigkeit der Einzelteile des Schüttgutes hinsichtlich der Größe und Kugelförmigkeit gegeben ist, das geschieht durch bevorzugte Verwendung einer Glasschüttung, bevorzugt von Glaskugeln bevorzugt mit einem Durchmesser von 0,5 bis 10 mm, insbesondere von 1,5 bis 5 mm. Es war völlig überraschend, dass Glaskugel für die Schüttung mit überraschenden Vorteilen eingesetzt werden können.

Diese Glaskugeln ermöglichen durch ihre Gleichförmigkeit im Kaliber völlig überraschend maximale Weiten der Durchbruchsöffnungen, sind überraschend mechanisch stabiler als der üblicherweise in der Brunnentechnologie eingesetzte Filterkies, sind vorteilhafterweise chemisch neutral und sehr standfest sowie aufgrund ihrer glatten Oberflächen überraschend unempfindlich für Anhaftungen von Bakterien und Verschmutzungen und leicht zu reinigen.

In der Kombination der dargestellten bevorzugten Merkmale der Durchbruchsöffnungen oder Durchtrittsöffnungen und der porösen Schüttung aus Glaskugeln sowie deren Dimensionierung liegt die überraschende Unempfindlichkeit der Vorrichtung und ihrer Verwendung gegen die sonst problematischen Ausfältreaktionen und Verstopfungen von Grundwasseranlagen begründet.

Als Filterstrecke wird im Sinne der Erfindung die Strecke verstanden, in der das zu filternde Medium, bevorzugt Grundwasser ggf. kontaminiert mit Schweb- und Schadstoffen, das Filtermaterial passiert. Die Filterstrecke kann dabei auch in mehrere, nicht horizontal oder vertikal durchströmte Filterabschnitte unterteilt sein, die unmittelbar oder über Fließstrecken, die frei von Filtermaterial sind, miteinander verbunden sind. Als Filtermaterialien wie poröse Schüttungen, bevorzugt aus Glaskugeln oder aber Mikrofilter oder Membranfilter oder aber Materialien, die mithilfe von verschieden großen Poren feste Bestandteile des Wassers trennen.

Die erfindungsgemäße Lehre stellt demgemäß eine Kombination dar, bei der mehrere Elemente zur Erreichung eines technischen Gesamterfolges zusammenwirken. Durch die funktionelle Wechselwirkung der einzelnen Elemente der erfindungsgemäßen Kombination mit dem umgebenden Lockergesteins bevorzugt unter Anwendung thermohydraulischer numerischer Strömungssimulation erfolgt eine optimale Nutzung der Erdwärme. Die vereinigten Elemente in der Kombination der erfindungsgemäßen Lehre gemäß der Ansprüche wirken gemeinsam auf ein einheitliches Ziel hin. Der einheitlich-technische Erfolg der Erfindung beruht auf den Wirkungen der einzelnen Elemente, die sozusagen die Klammer für die erfindungsgemäße Kombination darstellen. Der Stand der Technik gab dem Durchschnittsfachmann keine Anregung, gerade die beanspruchten Elemente der erfindungsgemäßen Kombination innerhalb eines Grundwasserhorizonts zusammenwirken zu lassen. Es war völlig überraschend, dass eine Anlage zur Nutzung von Erdwärme im Grundwasserleiter so gestaltet und dimensioniert werden kann, dass sie besonders effizient und störungsfrei arbeitet, wenn die das Hauptrohr zumindest teilweise, bevorzugt vollständig, umgebende poröse Schüttung und die Durchtrittsöffnungen des Hauptrohres bevorzugt gemäß den Ergebnissen einer thermohydraulischer numerischer Strömungssimulation als Filterstrecken ausgebildet sind und die beschriebenen Merkmale aufweisen. Diese Merkmale führen in Kombination mit dem Querverschluss innerhalb des Hauptrohres, wodurch die poröse Schüttung bevorzugt aus Glaskugeln ganz oder teilweise hydraulisch unterbrochen ist, zusammen mit der außerhalb des Hauptrohrs angeordneten Wärme nutzenden Vorrichtung zu einer Anlage, welche für die Zufuhr von Wärme genauso eingesetzt werden kann wie für die Abfuhr von Wärme. Bevorzugt sind die Wärmeträger aufweisenden Rohre kreisförmig außen um das Hauptrohr angeordnet. Es lag für den Fachmann nicht nahe, dass das Zusammenwirken der beanspruchten Komponenten gemäß der erfindungsgemäßen Anlage zu besonders guten Resultaten bei der Wärmezufuhr oder Abfuhr über einen langen Zeitraum fühlt, da eine Distanz der Förder- und Injektionsstelle des zum Wärmeaustausch genutzten Grundwassers von mehr als dem Dreifachen der hier empfohlenen Ausführung als unverzichtbar galt.

Die anmeldungsgemäße Lehre zeichnet sich durch folgende Merkmale aus:
- Abkehr vom technisch Üblichen: Während sich bislang für leistungsfähigen Wärmaustausch mit dem Grundwasser mindestens zwei Brunnen mit Distanzen von mindestens 15 Metem als erforderlich erwiesen hatten, können mit der Anwendung der vorgestellten Erfindung bevorzugt unter Anwendung moderner numerischer thermohydraulischer Simulationsverfahren diese Brunnen innerhalb einer Bohrung vertikal übereinander angeordnet werden wobei deutlich weniger als 10 Meter Abstand der als Filterstrecken ausgeführten Durchbruchsöffnungen des Hauptrohres einzuhalten sind,
- neue Aufgabenstellung: Die Kombination elastischer Wärmetauscherrohre, bevorzugt aus z.B. Polyethylen oder Edelstahl ermöglicht einen preiswerten, einfach zu bewerkstelligen Ausbau, der ebenso leicht, z.B. für Wartungszwecke, demontiert werden kann und hohe Wärmetauscherleistung ohne Förderung potenziell aggressiver Wässer zu empfindlichen Nutzerstrukturen ermöglicht,
- Vorliegen eines seit langem ungelösten dringenden Bedürfnisses für die Lösung des mit der Erfindung gelösten Problems: Insbesondere innerstädtisch und ähnlich begrenzten Platzverhältnissen ist leistungsfähige Nutzung von Geothermie bislang nicht realisierbar, mit der vorgestellten Erfindung nun auch ökonomisch möglich,
- bisheriges vergebliches Bemühen der Fachwelt Optimierungen des Wärmeübergangs bei üblichen Sondensystem sind im Stand der Technik am Ende ihres Potenzials angelangt, das umgebende Erdreich limitiert den Wärmetransport, so dass nur durch mehrfache Installation größere Leistungen ermöglicht werden können. Die Förderung und Injektion von Grundwasser führte regelmäßig zu Problemen bei der Injektion, so dass diese Technologie nur unter wenigen Umständen eingesetzt wird,
- die Einfachheit der Lösung spricht für erfinderische Tätigkeit, insbesondere da sie kompliziertere Lehren ersetzt: Die alleinige Bewegung vom natürlich vorhandenen Grundwasser unterhalb des Grundwasserspiegels mobilisiert das Wärmepotenzials eines großen Einflussbereichs und saisonale thermische Regenration, die induzierte Vertikalzirkulation ermöglicht weiträumige Erfassung der thermalen Energie mit nur geringen Temperaturveränderungen und ohne die durch Sauerstoffkontakt oder Druckwechsel ausgelösten Probleme.
- die Entwicklung der wissenschaftlichen Technik ging in eine andere Richtung: Die Probleme chemischer und Ausfällreaktionen in Brunnensystemen wurde bislang durch Druckhaltung und Stickstoffbeaufschlagung begegnet, statt auf kleinem Raum innerhalb eines einheitlichen chemischen und physikalischen Milieu zu operieren, so dass diese Probleme vermieden werden, auch ist der Einsatz spezieller Filterschüttungen und Filterrohre geeignet bakterielle und anderweitige Anhaftungen zu vermeiden, Turbulenzen zu mindern und einen weitgehend ungehinderten Zugang zur Wartung zu ermöglichen,
- entwicklungsstraffende Leistung,
- Fehlvorstellungen der Fachwelt über die Lösung des entsprechenden Problems (Vorurteil): Die gerichtete hydraulische Durchlässigkeit der Grundwasser führenden Lockergesteine beträgt horizontal bis zum 10fachen der vertikalen Durchlässigkeit, woraus sich eine bislang nicht für möglich gehaltene Nutzung auch schmaler Grundwasserhorizonte in Form vertikaler Durchströmung in großem Radius ergibt, statt zwei in großer Distanz zueinender gelegener Brunnen zu errichten und eine horizontale Durchströmung auszulösen,
- Ein technischer Fortschritt besteht in der Leistungssteigerung der innerhalb einer Bohrung zu realisierenden Wärmetauscherleistung, dadurch begründeten Verbilligung und Ersparnis an Zeit und Material bei der Errichtung, erhöhter Zuverlässigkeit im Betrieb, weitgehende Wartungsfreiheit,
- da aus einer Vielzahl von Möglichkeiten eine bestimmte gewählt wurde, deren Ergebnis nicht vorausgesagt werden konnte, handelt es sich um ein patentwürdigen glücklichen Griff,
- Intümer in der Fachliteratur bzw. sehr widersprüchliche Darstellung zum Erfindungsgegenstand,
- junges Gebiet der Technik,
- Kombinationserfindung, d.h. mehrere bekannte Elemente werden zu einer Kombination zusammengeführt, die einen überraschenden Effekt aufweist: Erst durch Einführung moderner geothermischer Messverfahren und numerischer thermohydraulischer Simulationsverfahren ist es möglich geworden mit wenig Aufwand leistungsfähige Anlagen unter Einhaltung der gesetzlichen und technischen Rahmenbedingungen zu konstruieren und zu errichten,
- Lizenzvergabe,
- Lob der Fachwelt und
- wirtschaftlicher Erfolg.

Insbesondere die vorteilhaften Ausführungsformen der Erfindung weisen mindestens einen oder mehrere der genannten Vorteile auf.

Es war völlig überraschend, dass die Kombination aus einem Hauptrohr, welches in der Bohrung eines Brunnens platziert wird und welches zur Umgebung Durchtrittsöffnungen aufweist, die als Filterstrecken ausgebildet sind, in Verbindung mit mindestens einem Querverschluss in dem Hauptrohr und einer Vorrichtung zur Auslösung oder zum bevorzugt kontinuierlichen oder diskontinuierlichen Antrieb einer Strömung aufweist zu einer verbesserten Anlage zur Nutzung von Erdwärme aus dem Grundwasser führt, wenn dem Hauptrohr mindestens ein wärmenutzendes Organ zugeordnet ist oder es mit diesem wirkverbunden vorliegt und das Hauptrohr zumindest teilweise von einer porösen Schüttung umgeben ist, wobei im Bereich des Querverschlusses innerhalb des Hauptrohres die poröse Schüttung durch ein dichtendes Material unterbrochen ist, so dass die Schüttung in Bezug auf das ein- oder ausströmende Wasser im wesentlichen zumindest teilweise hydraulisch unterbrochen ist Die Ausgestaltung der Durchtrittsöffnungen sowie der umgebenden porösen Schüttung wird bevorzugt aufgrund numerischer Strömungssimutation als Strömungssteuerung im o.g. Sinne konstruiert. In Abhängigkeit von der Bemessung der Durchtrittsfläche der Durchtrittsöffnungen des Hauptrohres und der Korngröße der porösen Schüttung wird eine Strömungsteuerung hinsichtlich Volumenstrom, Richtung und Weite bewirkt.

Besonders vorteilhaft an einer bevorzugten Ausführungsform der erfindungsgemäßen Anlage ist, dass Grundwasser oder Wasser nicht zutage gefördert wird, sondern unterirdisch eine Zirkulation erzeugt wird. Besonders vorteilhaft ist dabei, dass aufgrund der konstruktiv bedingten Strömungssteuerung und der hydraulischen Sperre, bevorzugt in Form des Querverschlusses in der Bohrung, ein hydraulischer Kurzschluss weitgehend unterbunden wird und der Erdkörper in großem Radius mit sehr langsamen Strömungsgeschwindigkeiten durchflutet wird.

Im Übrigen zeichnet sich die erfindungsgemäße Anlage dadurch aus, dass letztlich nur ein Hauptrohr mit außenliegenden Rohre mit Wärmeträgern in die Bohrung eingebracht werden muss, in Kombination mit der besonderen Ausbildung und Anordnung der Schüttung, welche zwischen den Filterstrecke dichtend ausgebildet ist.

Bei der erfindungsgemäßen Anlage treten nur sehr geringe, gleichmäßige, langsame Fließgeschwindigkeiten mit laminarem Strömungsprofil auf, wodurch das Auftreten von Ausfällreaktionen von Substanzen, die im Grundwasser gelöst sind, und Aktivität (von z.B. eisenoxidierenden) Bakterien minimiert wird. Es war überraschend, dass die erfindungsgemäße Kombination der technischen Merkmale zu einer Minimierung der Aktivität von Bakterien führt.

Insbesondere aus vorteilhaften Ausgestaltungen der erfindungsgemäßen Anlage zur Nutzung von Thermalenergie resultiert unter anderem ein nur geringer Eingriff in den Wasserhaushaft und somit in das ökologische System insgesamt. Der wesentliche Grund dafür ist, dass das Grundwasser letztlich nur bewegt wird und nicht gefördert wird, weshalb auch eine Anlage gemäß der vorliegenden Erfindung unproblematischer im Hinblick auf amtliche Genehmigungsverfahren ist da Grundwasserfördergebühren und Überwachungspflicht bei Reinjektion entbehrlich sind.

Eine Anlage gemäß der vorliegenden Erfindung verursacht vorteilhafterweise nur geringfügige thermische Beeinflussungen im Gegensatz zu einer starken lokalen Überwärmung oder Abkühlung bei geschlossenen (Sonden-)Anlagen aus dem Stand der Technik.

Neben den bereits beschriebenen Vorteilen ist die erfindungsgemäße Anlage auch wartungsfreundlicher, da bevorzugt oberirdisch keine Anlagenbestandteile angeordnet sind, welche im Zusammenwirken mit dem Luftsauerstoff korrodieren können. Teurere korrosionsbeständige Ausführungen bspw. der Wärmetauscher sind verzichtbar. Abschließend ist bevorzugt lediglich noch die erfindungsgemäße Verfüllung des Bohrloches mit der zentral angeordneten dichtenden Schicht einzubringen. Auch eine Wartung ist einfach zu realisieren und eine derart gestaltete Anlage nahezu vollständig zu inspizieren, zerlegbar und in ihren Komponenten gegebenenfalls ersetzbar.

Die erfindungsgemäße Anlage zeichnet sich im Übrigen durch eine 5 bis 10-fach höhere Leistung im Bezug auf die Nutzung von Thermalenergie gegenüber bereits bekannten Anlagen aus.

Im Sinne der Erfindung kann es sich bei der Vorrichtung, die eine Strömung auslöst oder initiiert beispielsweise um eine elektrische oder mechanische Vorrichtung oder eine Kombination aus beiden handeln. Im Falle einer mechanischen Vorrichtung kann beispielsweise eine Schnecke, ein Schaufelrad oder ähnliches vorgesehen sein und im Falle einer elektrischen Vorrichtung eine Pumpe. Bevorzugt sind diese Vorrichtungen oder Teile hiervon in der Öffnung des Querverschlusses angeordnet. Aber selbstverständlich kann es auch vorgesehen sein, dass die Pumpe oder wichtige Elemente der mechanischen Anordnung, bevorzugt der Schnecke, überirdisch angeordnet sind, so dass nur ein Teil dieser Anlagen in der Öffnung des Querverschlusses positioniert vorliegt. Im Sinne der Erfindung ist bevorzugt sicherzustellen, dass eine Strömung zwischen dem oberen und dem unteren Teil des Hauptrohres stattfindet, das heißt insbesondere über- und unterhalb des Querverschlusses, der auch als Dichtmanschette bezeichnet werden kann. Bevorzugt wird eine Pumpe verwendet, da diese preiswert und energieeffizient sowie marktgängig, gut regelbar und leicht austauschbar ist. Selbstverständlich ist es möglich, dass die Pumpe vollständig in der Öffnung angeordnet ist

Das wärmenutzende Organ oder die Vorrichtungen außerhalb des Hauptrohrs können beispielsweise mehrere Rohre sein, die außen um das Hauptrohr angeordnet sind. Diese mehreren Rohre können beispielsweise vom Bereich der Erdoberfläche in die Schüttung verlaufen, wobei im Inneren der mehreren Rohre ein Wärmeträger, bevorzugt Wasser und/oder Sole, zirkuliert.

Die poröse Schüttung, die das Hauptrohr zumindest teilweise, bevorzugt vollständig umgibt, um den verbleibenden Hohlraum der Bohrung um das Hauptrohr zu füllen, kann beispielsweise aus Kies, kleineren oder größeren Steinen, Geröllen beispielsweise auch aus definierten Kugeln bestehen. Die Korngröße der Schüttung kann hierbei bevorzugt im Bereich von 1 mm - beispielsweise bei Feinkies oder Glaskugeln - bis in den Bereich von 20 mm im Bereich von Grobkies liegen. Die poröse Schüttung, beziehungsweise das poröse Stoffsystem besteht, wie dem Fachmann auf dem betreffenden Gebiet bekannt ist, aus einer festen Phase - den Partikeln - und den Zwischenräumen (dem Hohlraum). Innerhalb der porösen Schüttung gibt es durchgehende, zugängliche nicht durchgehende und geschlossene Poren. Daher gibt es auch strömbare und nicht durchströmbare poröse Schichten. Anmeldungsgemäß werden durchströmbare poröse Schichten beansprucht, die durch die Schüttung von Sand, Kies oder ähnlichen Partikeln bestehen, bevorzugt Keramik oder besonders bevorzugt Glas. Es war völlig überraschend, dass die Schüttung aus Glas zu besonders überraschenden Vorteilen führt. Besonders bevorzugt ist es, wenn die Schüttung vor allem eine Glasschüttung aus Glaskugeln ist. Die poröse Schicht wird zum Einen über ihre Porosität und ihren Feststoffanteil definiert. Im Sinne der Erfindung wird die Porosität einer entsprechenden Schüttung als ein Maß für die Dichte der Schüttung mit ihren Hohlräumen verstanden. Sie kann daher auch als relative Dichte im Vergleich zu einem massiven Stoff definiert werden. Die Gesamtporosität der Schüttung setzt sich zusammen aus der Summe der Hohlräume, die untereinander und mit der Umgebung in Verbindung stehen und denen nicht miteinander verbundenen Hohlräumen. Die Porosität von Schüttungen beschreibt das Volumen von Hohlraumanteilen, die von beweglichen, wanderungsfähigen Medien wie Wasser und/oder Gas, eingenommen werden kann. So hat beispielsweise Kies eine Gesamtporosität von bis zu über 40 %. Für die Gesamtporosität kann auch der Terminus des Undichtigkeitsgrades verwendet werden.

Die poröse Schüttung wird bevorzugt auf der Höhe bzw. im Bereich des Querverschlusses innerhalb des Hauptrohres durch ein dichtendes Material unterbrochen, bei dem es sich beispielsweise um Ton handeln kann. Im Sinne der Erfindung bezeichnet man als Ton Mineralkömer eines natürlichen Ursprungs mit einer Komgröße bzw. einem Äquivalentdurchmesser von kleiner als 20 µm, bevorzugt kleiner als 10 µm, besonders bevorzugt kleiner als 2 µm. Im Sinne der Erfindung kann es sich bei dem Ton vor allem um Tonmineralien handeln, die Silizium, Sauerstoff, Wasserstoff bzw. Magnesium und Aluminium umfassen. Es kann sich beispielsweise um Silikate oder um die Mineralien Goethit oder Gibbsit handeln, die keine Silikate sind. Selbstverständlich kann auch kieselsaures Kalzium mit Anteilen an Aluminium und Eisen als dichtendes Material für den Querverschluss verwendet werden.

Besondere Aufmerksamkeit ist der Gestaltung der Filterstrecke zu widmen, die eine kontinuierliche Geschwindigkeitsentwicktung des Grundwassers aus der Peripherie im Lockergestein bis zum Innenraum des Hauptrohres gewährleistet und bevorzugt in ihren hydraulischen Parametem der Durchlässigkeit der umgebenden geologischen Formation in vertikaler und horizontaler Richtung angepasst werden muss. Hierzu sind z.B. Untersuchungen des Lockergesteins anhand von Bohrproben erforderlich und eine Abstimmung mit den Durchbruchsöffnungen im Hauptrohr. Die Durchbruchsöffnungen sind bevorzugt mit einer Aufweitung nach außen, z.B. in keilförmiger Ausgestaltung der Stege zwischen den Öffnungen, so dass eine Zusetzung (sogenannte Kolmation) vermieden wird und bei maximaler Öffnung nur geringe Strömungsbehinderung für minimalen Energieverbrauch der Zirkulationspumpe besteht und ein guter Zugang für Hochdruckdüsenstrahlreinigung o.a. Wartungsverfahren gegeben ist. Damit minimiert sich das Auftreten von Wirbeln und Turbulenzen, die eine vorzeitige Brunnenalterung bewirken würden. Das einzusetzende Schüttgut stellt eine elastische Lagerung der Brunnenausbauten dar, die z.B. bei Erdbeben und kleineren Erdrutschen Schutz verleiht und eine optimale hydraulische Anbindung ermöglicht Bevorzugt als poröse Füllung ist Schüttgut mit glatten u.U. polierten Oberflächen des Schüttguts geeignet, hohen Durchsatz bei minimalen Anhaftungen zu bewirken, so dass bei der initialen "Entwicklung" des Brunnens eine kontinuierliche Verteilung von groben Kömem an der Bohrlochwand bis zum Feinsand in der Peripherie. Das Schüttgut, bevorzugt Glas, sollte ausreichend mechanisch und chemisch stabil sein, sowie hohle Masshaltigkeit der Durchmesser aufweisen, so dass große Durchbruchsöffnungen im Hauptrohr ermöglicht werden.

In einer weiteren besonders bevorzugten Ausführungsform der Erfindung ist vorgesehen, dass die strömungsauslösende Vorrichtung eine Pumpe ist Vorzugsweise werden hier niedertourige Kreisel-Brunnenpumpen mit Nassläufer-Unterwassermotor in Permanentmagnettechnologie und den Brunnen schonenden Sanftanlauf über Frequenzumrichtung eingesetzt. Mit Hilfe der Pumpe wird eine Strömung des Wasser aus dem unteren Bereich der geologischen Formation durch den unteren Teil des Hauptrohrs in den oberen befördert und von dort wieder in den Grundwasserhorizont injiziert Die Pumpe muss dabei neben den vernachlässigbaren Rohrwiderständen den hydraulischen Widerstand im durchströmten Grundwasserleiter überwinden. Wenn statt der Pumpe beispielsweise eine Schnecke bzw. Förderschnecke verwendet werden soll, so handelt es sich hierbei um eine Welle, um die ein oder mehrere schneckenförmig gewundene Gänge, bevorzugt in Form von flachen Blechen, Gummilappen oder anderen ausgewählten Kunststoffen oder Metallen oder Keramiken gewendelt werden. Hierbei ist die Welle in ein Rohr oder auch ein Halbrohr gesetzt. Die Förderschnecken können als starre oder flexible, biegsame Schnecken ausgeführt sein. Bei flexiblen Schnecken ist die Welle ebenfalls flexibel. Selbstverständlich ist es auch möglich, auf die Welle zu verzichten, um so eine seelenlose Schnecke oder Spirale bereitzustellen, wobei sich die Begrenzungen um die eigene gebogene Achse drehen. Vorteilhafterweise wird in diesem Fall die stabilisierende Wirkung der starren Welle durch Profile erzielt, die in die Spirale eingearbeitet sind. Wenn die erfindungsgemäße Vorrichtung zum Auslösen, Unterstützen, Initiieren und/oder Aufrechterhalten einer Strömung eine Pumpe ist werden diese als Fluidenergiemaschinen eingesetzt bei denen die dem Fluid Wasser innewohnende Energie durch Aufbringung mechanischer Arbeit erhöht wird. Der Druck des Wassers wird erhöht oder ihm wird Bewegungsenergie mitgegeben, bevorzugt zum Zwecke einer Ortsveränderung. Erfindungsgemäß zählen auch Rührwerke oder umgebaute Verdichter oder Gebläse zu den Pumpen. Die Pumpen können insbesondere als Verdrängerpumpen oder Strömungspumpen ausgebildet sein. Selbstverständlich ist es auch möglich, dass die Pumpen Strahlpumpen sind, wie Wasserstrahlpumpen oder aber Mammutpumpen, Blasenpumpen, Stoßheber oder Pferdekopfpumpen. Wenn die eingesetzten Pumpen Verdrängungspumpen sind, so kann es sich hierbei beispielsweise um Membranpumpen, Rotationskolbenpumpen, Exzenterschneckenpumpen, Impellerpumpen, Kolbenpumpen, Schlauchpumpen, Schraubenspindelpumpen, Sinuspumpen oder Zahnriemenpumpen handeln. Wenn es sich bei den Pumpen um Strömungspumpen handelt, können diese bevorzugt Axialpumpen, Diagonalpumpen und/oder Radialpumpen sein.

In einer anderen bevorzugten Ausführungsform der Erfindung ist das wärmenutzende Organ oder die wärmenutzende Vorrichtung mindestens ein Rohr oder ein Teil davon bzw. ein thermodynamisches Element zur Weiterleitung oder Aufnahme von Wärmeenergie oder zur Stromerzeugung, welches in der Schüttung positioniert ist. Es war völlig überraschend, dass diese Positionierung zu einer verbesserten Anlage führt. Wenn das wärmenutzende Organ bzw. die wärmenutzende Vorrichtung ein Rohr ist, kann es vorteilhaft sein, wenn die Rohre, die einen Wärmeträger beinhalten, koaxial ausgestaltet sind. Für eine Anordnung der Wärmetauscherrohre radial um das Hauptrohr sind in der Regel 2 bis 8 u-förmig gebogene Polyethylenrohre im Kaliber 25-40 mm besonders vorteilhaft. Alternativ können Sonde mit einem direkt verdampfenden Kältemittel eingebaut werden oder thermoelektrische Bauelemente, die zur Umwandlung zu Elektroenergie geeignet sind und in der Grundwasserströmung installiert oder bevorzugt ein äußerer Bestandteil des Hauptrohres sind. In einer anderen bevorzugten Ausführungsform der Erfindung sind die Wärmeträger, die bevorzugt in den Rohren vorliegen, beispielsweise Wasser oder Sole. Die Verwendung von Sole hat den Vorteil, dass bei Temperaturen von weniger als 0 Grad Celsius eine Eisbildung verhindert werden kann. Die Sole im Sinne der Erfindung kann beispielsweise aus einer Salzlösung bestehen, aber beispielsweise aus Gründen der Korrosionsgefahr auch aus einer Lösung, die Glykole umfasst. In einer weiteren bevorzugten Ausführungsform wird durch die Vorrichtung, insbesondere durch die Pumpe eine Strömung über- und/oder unterhalb des Querverschlusses ausgelöst Es war besonders überraschend, in welchem Ausmaß die Effizienz der Anlage zur Nutzung von Erdwärme verbessert werden kann, wenn über- und unterhalb des Querverschlusses eine lateral gerichtete Strömung initiiert wird. Durch dieses Vorgehen wird erreicht, dass die ausgelöste Zirkulation des Grundwassers durch das Hauptrohr eine optimale Ausnutzung der vorhandenen Wärme des Grundwassers aus einem großen Gebiet gestattet Das Grundwasser umspült die um das Hauptrohr angeordneten Wärmetauscherrohre / -sonden. Die Sonden sind bevorzugt unter dem Grundwasserspiegel angeordnet und es findet ein Austausch der Thermalenergie zwischen insbesondere dem gefördertem Grundwasser und dem Wärmeträger in den Sonden statt. Dies kann auch so erfolgen, dass der Wärmeträger verdampft und dann derart aufsteigt, dass oberirdisch dem Wärmeträger die Wärme wieder entzogen werden kann.

In einer weiteren bevorzugten Ausführungsform der Erfindung ist vorgesehen, dass die Rohre mit dem Wärmeträger oberhalb oder im Wesentlichen oberhalb der Höhe des Querverschlusses des Hauptrohres angeordnet sind. Die Anordnung oberhalb des Querverschlusses innerhalb der Schüttung erlaubt überraschenderweise eine besonders gute Zirkulation des Grundwassers in der erfindungsgemäßen Vorrichtung. Vor allem kann das Grundwasser über die Durchtrittsöffnungen unterhalb des Querverschlusses besonders effizient einströmen, wenn die Rohre mit dem Wärmeträger oberhalb des Querverschlusses oder zumindest im Wesentlichen oberhalb des Querverschlusses in der Schüttung angeordnet sind. Diese überraschende Verbesserung der Zirkulation des Grundwassers durch das Hauptrohr führt dazu, dass die erfindungsgemäße Anlage überraschenderweise besonders wenig störanfällig und besonders effizient gegenüber den Anlagen des Standes der Technik ist. Es können kleinere Rohrkaliber und Bohrungsdurchmesser verwendet werden, die Stabilität der Bohrung erhöht sich, es entsteht weniger Abraum / Bohrgut, die Bohrung kann schneller niedergebracht woraus sich zeitliche und finanzielle Vorteile ergeben

In einer weiteren bevorzugten Ausführungsform der Erfindung ist vorgesehen, dass die Rohre mit den Wärmeträgem koaxial ausgestaltet sind. Im Sinne der vorliegenden Erfindung werden die Rohre in denen der Wärmeträger zirkuliert auch als Sonden oder Wärmetauscherrohre bezeichnet Dabei kann es sich um kommunizierende Röhren oder koaxial bevorzugt um das Hauptrohr ausgestaltete Röhren handeln. Die Sonden sind bevorzugt kreisförmig entlang der Außenwand des Hauptrohres angeordnet Insbesondere die koaxiale Ausgestaltung der Rohre bzw. der Röhren erlaubt eine gute Aufnahme und Weiterleitung der Erdwärme durch die erfindungsgemäße Vorrichtung. Es war überraschend, dass koaxial ausgestaltete Röhren zu einer Verbesserung der erfindungsgemäßen Vorrichtung im Zusammenhang mit den oben genannten Kombinationen der technischen Merkmale gemäß der Patentansprüche führen. Die koaxiale Ausgestaltung der Rohre bzw. der Röhren führt zu einer besonders effizienten Anlage insbesondere dann, wenn die Rohre mit dem Wärmeträger kreisförmig entlang der Außenwand des Hauptrohres angeordnet sind. Die koaxiale Ausgestaltung führt zu einem besonders platzsparenden Aufbau und die kreisförmige Anordnung entlang der Außenwand des Hauptrohres führt zu einem maximalen Kontakt der Wässer mit den Rohren und erlaubt so eine optimale Anströmung.

In einer weiteren bevorzugten Ausführungsform der Erfindung ist vorgesehen, dass die Rohre mit Wärmeträger als Platten mit geeigneten Hohlräumen zur Zirkulation des Wassers ausgebildet sind. Bevorzugt ist dabei, dass derartige Platten z.B. wabenförmig angeordnete Hohlräumen aufweisen, durch welche ein Wärmeträger strömen kann. Weiterhin ist auch ein modulartiger Aufbau der Sonden vorgesehen, bei dem die Verwendung von Rohren und Platten kombiniert werden kann. Hierbei kann es sich erfindungsgemäß insbesondere um Plattenwärmetauscher handeln. Die Plattenwärmetauscher sind Plattenwärmeüberträger. Sie können beispielsweise aus wellenförmig profilierten Platten bestehen, die so zusammengesetzt werden, dass jeweils in den aufeinanderfolgenden Zwischenräumen einmal ein aufzuwärmendes und danach ein wärmeabgebendes Medium fließt. Bevorzugt ist das durch die Platten gebildete Plattenpaket in Form des Plattenwärmeüberträgers nach außen und zwischen den Medien abgedichtet. Vorteilhafterweise sind Plattenwärmeüberträger sehr gut erweiterbar und sehr flexibel bei der Gestaltung der Strömungsführung.

In einer weiteren bevorzugten Ausführungsform der Erfindung ist vorgesehen, dass es sich bei dem dichtenden Material, welches die poröse Schüttung trennt, um Ton oder Zement oder andere kompakte Materialen handelt, die vorteilhafterweise billig erworben werden können oder radioaktiv oder magnetisch oder auch anders markierbar sind. Ton und Tonmineralien können im Sinne der Erfindung synonym behandelt werden. Ton ist im Sinne der Erfindung eine Hauptbodenart des Feinbodens. Erfindungsgemäße Tonmineralien sind beispielsweise Materialien, die Kaolinit, Chrysotil, Illit, Chlorit, Montmorillonit, Beidellit, Nontronit, Saponit oder andere umfassen. Die Tonmineralien sind sehr weich, sie reagieren plastisch auf mechanische Beanspruchung und können sich beim Erhitzen in härtere und feste Materialen umwandeln, wie beispielsweise Keramik. Die Tonmineralien besitzen eine große spezifische Oberfläche, die dazu führt, dass Stoffe adsorbiert und desorbiert werden können. Vorteilhafterweise haben Tonmineralien oder Ton eine geringe Wasserdurchlässigkeit und können so überraschend gut als dichtendes Material verwendet werden. Aber auch verschiedene Zementarten eignen sich sehr gut zum Abdichten. Durch die Zumahlung unterschiedlicher Zusatzstoffe wie Hüttensand, Puzzolan, Flugasche und/oder Kalkstein können die Zemente mit verschiedenen chemischen und physikalischen Eigenschaften, insbesondere im Hinblick auf ihre dichtenden Eigenschaften, hergestellt werden. Ton oder Zement eignen sich überraschend gut, um die poröse Schüttung hydraulisch zu trennen, insbesondere Tonpellets lassen sich als Schüttgut leicht einbringen und quellen innerhalb mehrerer Stunden zu einer homogenen dauerplastischen Masse ohne das Risiko benachbarte poröse Schüttung zu durchsetzen und damit hydraulisch abzudichten.

In einer weiteren bevorzugten Ausführungsform der Erfindung ist vorgesehen, dass neben den Wärmeträgem Wasser oder Sole in den Rohren auch thermoelektrische oder thermodynamische Elemente verwendet werden können. Im wesentlichen handelt es sich bei den thermoelektrischen Elementen um ein Bauteil aus zwei unterschiedlichen und an einem Ende miteinander verbundenen Metalle. Die thermoelektrischen Elemente sind insbesondere zur Erzeugung von elektrischer Energie geeignet, wobei eine Temperaturdifferenz an sie angelegt wird. Im Stand der Technik sind verschiedene thermoelektrische Elemente beschrieben, wie z. B. Peltier-Elemente. Die Peltier-Elemente sind elektrothermische Wandler, die bei einer Temperaturdifferenz einen Stromfluss erzeugen können. Diese thermoelektrischen Elemente können bevorzugt in der Grundwasserströmung installiert werden oder bevorzugt ein außenliegender Bestandteil des Hauptrohres sein.

Die Wärmetauscher sind bevorzugt in der Strömung auf dem Weg zwischen dem Querverschluss und der Injektionsstrecke angeordnet, z.B. in der aufsteigenden Strömung im Hauptrohr oder z. B. bei großen Tiefen in der abwärts gerichteten Strömung wobei in diesem Fall das Hauptrohr bevorzugt oberhalb des Querverschluss doppelläufig ausgeführt wird, z.B. in Form eines Koaxialrohres durch Einfügung eines zusätzlichen Steigrohres, um das herum dann die Wärmetauscherrohre im abwärts gerichteten Strom angeordnet werden, jedoch bevorzugt immer unterhalb des Grundwasserspiegels.

In einer weiteren Ausgestaltungsform der Erfindung wird als Wärmeträger ein Käftemittel eingesetzt, welches in den Rohren zirkuliert, vorzugsweise Ammoniak oder Kohlendioxid. Ein Kältemittel ist bevorzugt ein Fluid, das zur Wärmeübertragung einsetzbar ist und das bei niedriger Temperatur und/oder niedrigem Druck Wärme aufnimmt und bei höherer Temperatur und/oder höherem Druck Wärme abgibt wobei üblicherweise Zustandsänderungen des Fluids erfolgen. Selbstverständlich ist es auch möglich, ein System ohne Pumpe einzusetzen.

Neben Ammoniak und Kohlendioxid können auch Kohlenwasserstoffe eingesetzt werden, beispielsweise Kohlen-Wasserstoff, Fluor-Kohlen-Wasserstoff, Fluor-Chlor-Kohlen-Wasserstoff, Hydrogen-Fluor-Kohlen-Wasserstoff und/oder Hydrogen-Fluor-Chlor-Kohlen-Wasserstoff. Weitere bevorzugt anorganische Verbindungen sind neben Ammoniak- Helium, Neon, Stickstoff, Argon, Schwefeldioxid oder Schwefelhexafluorid.

Bevorzugte Kältemittel mit einem Kohlenstoffatom sind beispielsweise Tetrachlormethan, Trichlorfluormethan, Tetrafluormethan, Trichlormethan, Dichlormethan, Chlormethan oder Methan. Bevorzugte Kühlmittel mit zwei Kohlenstoffatomen sind beispielsweise Hexachlroethan, Pentafluorethan, Trichlorethen oder Ethen. Bevorzugte Kältemittel mit drei Kohlenstoffatomen sind beispielsweise Propan, Propen oder Heptachlorfluorpropan. Aber auch N-Butan, N-Pentan, Neo-Pentan oder Diethylether bzw. Ethylamin können als Kältemittel im Sinne der Erfindung eingesetzt werden. Selbstverständlich sind auch Kombinationen aller genannten Kältemittel gut einsetzbar.

In einer weiteren bevorzugten Ausführungsform der Erfindung kann es vorgesehen sein, dass Wärmeträger wie Wasser oder Sole und/oder die Kältemittel in verschiedenen oder identischen Rohren miteinander kombiniert werden. Durch diese Kombination insbesondere von Rohren, in denen ein Kältemittel zirkuliert und von Rohren, in denen ein Wärmeträger wie Wasser oder Sole zirkuliert, ist eine besonders effiziente Nutzung der Erdwärme möglich.

In einer weiteren bevorzugten Ausführungsform der Erfindung ist vorgesehen, dass die Zirkulation der Wärmeträger beispielsweise von Wasser oder Sole, aber auch des Kältemittels durch eine Pumpe zumindest teilweise unterstützt wird. Die Pumpe ist in der Lage, eine Zirkulation in den Rohren zu induzieren. Wenn statt der Rohre Wärmetauscher, beispielsweise Plattenwärmetauscher, eingesetzt werden, werden die Wärmeträger analog durch diese oder an diesen vorbei geführt In einer weiteren bevorzugten Ausführungsform der Erfindung verdampft das als Wärmeträger eingesetzte Kältemittel bei niedrigem Druck und z.B. bei weniger als 5°C in den Sonden, wird dadurch wieder nach oben getrieben und gibt die höhere Temperatur an einem Wärmetauscher ab oder wird in einem Kompressor auf ein höheres Temperaturniveau gebracht, kondensiert in einem Nutz-Sekundärkreislauf und wird mittels einem Expansionsventil wieder bei niedrigem Druck und geringer Temperatur erneut zur Verdampfung eingespeist Vorteilhaft ist hierbei die Möglichkeit das Kältemittel aufgrund seiner thermisch ausgelösten Aggregatszustandsveränderung ohne Pumpe zirkulieren zu lassen.

In einer weiteren bevorzugten Ausführungsform der Erfindung besteht das Hauptrohr bevorzugt aus PVC, Stahl, insbesondere Edelstahl, oder einer Kombination hieraus. Die Wärmetauscher, die bevorzugt außen um das Hauptrohr in der Schüttung angeordnet sind, beispielsweise insbesondere die Wärmetauscherrohre, können ihrerseits insbesondere aus Polyethylen, Stahl, bevorzugt Edelstahl, oder Kupfer oder aus einer Kombination dieser Elemente bestehen. Neben PVC können selbstverständlich auch alle anderen thermoplastischen Kunststoffe, insbesondere ein amorpher thermoplastischer Kunststoff, eingesetzt werden. Neben dem konkret benannten Polyethylen können auch andere Polyolefine eingesetzt werden.

Die Erfindung betrifft auch die Verwendung der erfindungsgemäßen Anlage, insbesondere der erfindungsgemäßen Grundwasserzirkulation, zur Gewinnung von Erdwärme, aber auch zur Abfuhr von Wärme und zur Gewinnung von Strom. Überraschenderweise kann die Gewinnung von Erdwärme mit der Abfuhr von Wärme durch die erfindungsgemäße Anlage sehr gut miteinander kombiniert werden, so dass eine solche Anlage bei kalten Umgebungstemperaturen beispielsweise im Winter zum Heizen oder Erwärmen von Gebäuden herangezogen werden kann und bei hohen Umgebungstemperaturen - beispielsweise im Hochsommer - zur Kühlung von Gebäuden genutzt werden kann. Hierzu sind zwischen den einzelnen Nutzungsarten keinerlei konstruktive Veränderungen der Anlage erforderlich.

Demgemäß kann die Grundwassertemperatur auch zur Kühlung verwendet werden, so dass die Anlage sehr gut dazu geeignet ist, Thermalenergie zum Entzug von Wärme durch direkte Wärmeableitung aus in Kühlflächen zirkulierendem Wärmeträger oder als Kaltwassersatz für Kompressionsklimaanlagen zu nutzen. Demgemäß kann das geförderte Grundwasser nicht nur dazu verwendet werden, um Erdwärme zu nutzen, sondem es kann in einer vorteilhaften Ausführungsform auch vorgesehen sein, dass das geförderte Grundwasser dazu verwendet werden kann, um zu kühlen und so synergistisch saisonale Wärmespeicherung zu realisieren und damit die mögliche Jahresheiz- und Kühlarbeit erheblich und langfristig zu steigem.

Neben der Gewinnung von Erdwärme und der Abfuhr von Wärme kann die Anlage auch problemlos zur Gewinnung von Strom herangezogen werden, wenn beispielsweise thermoelektrische Bauteilen der erfindungsgemäßen Vorrichtung eingebaut sind oder aus Tiefen mit Temperaturen von mehr als 100°C zum Turbinenbetrieb gefördert werden kann. Es war besonders überraschend, dass die erfindungsgemäße Anlage auch zur Dekontamination von Grundwasser geeignet ist.

Die Erfindung betrifft auch die Verwendung einer erfindungsgemäßen Vorrichtung zur Nutzung von Erdwärme, und Gewinnung von Strom, wobei die Vorrichtung ein Hauptrohr in einer Bohrung eines Brunnens umfasst, wobei das Durchtrittsöffnungen aufweisende bevorzugt zentral in der Bohrung eines Brunnens angeordnete Hauptrohr durch einen Querverschluss in einen oberen und einen unteren Teil unterteilt wird und der Querverschluss eine Öffnung aufweist, in der mindestens teilweise eine Vorrichtung, insbesondere eine Pumpe angeordnet ist die eine Strömung auslöst und/oder unterstützt und das Hauptrohr bevorzugt mindestens im Bereich der Durchtrittsöffnungen, besonders bevorzugt vollständig von einer porösen Schüttung umgeben ist, welche den Bereich bzw. Hohlraum oder Raum der Bohrung um das Hauptrohr ausfüllt und die poröse Schüttung im Bereich bzw. auf der Höhe des Querverschlusses durch ein dichtendes Material hydraulisch unterbrochen ist und im Raum zwischen dem Hauptrohr und der Bohrung wärmenutzende Vorrichtungen, bevorzugt Rohre, angeordnet sind, in denen ein Wärmeträger zirkuliert und die wärmenutzende Vorrichtung von der Erdoberfläche in die Schüttung verläuft, wobei die mindestens eine, bevorzugt die mehreren, bevorzugt alle Durchtrittsöffnungen als Filterstrecke ausgebildet sind. Die hydraulische Unterbrechung erfolgt vorzugsweise durch quellende Tone, Zement oder andere, möglichst dauerplastische Materialien. Die vorteilhaften und überraschenden Effekte die für die Vorrichtung beschrieben wurden, gelten auch für die Verwendung der Vorrichtung.

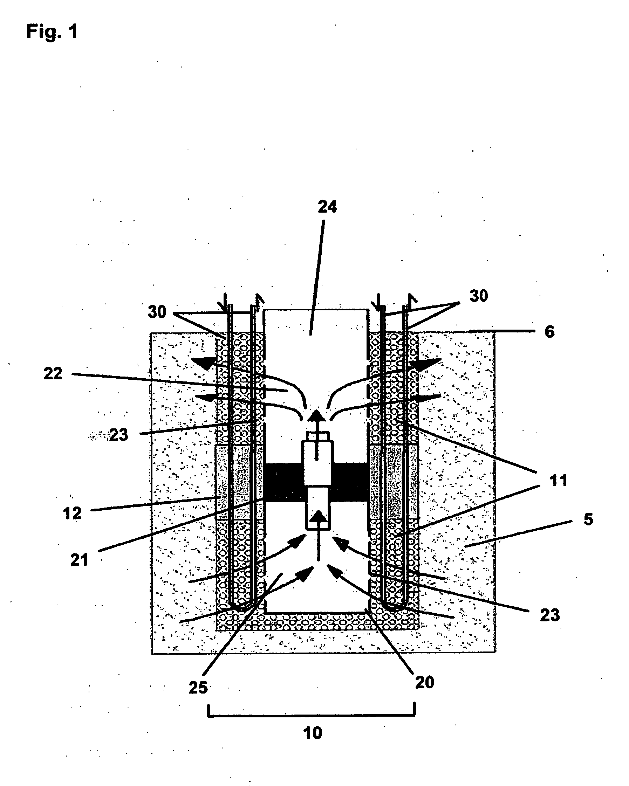

Die Erfindung wird im Folgenden anhand von Beispielen und Abbildungen beschrieben, ohne darauf beschränkt zu sein. Es zeigt
- **FIG 1**: Schematische Schnittzeichnung durch eine Anlage mit Wärmetauscher im Ringraum zwischen Hauptrohr und Bohrung

Figur 1 zeigt eine schematische Schnittzeichnung durch eine erfindungsgemäße Anlage mit Wärmetauscher im Ringraum bzw. der porösen Schüttung (11) im Ringraum zwischen Hauptrohr (20) und Bohrung. Dabei ist eine Bohrung (10) im Erdreich (5) angeordnet und die Bohrung (10) schließt an der Erdoberfläche (6) ab.

Innerhalb der Bohrung (20) ist vorzugsweise zentral das Hauptrohr (20) angeordnet. Dieses wird von einer porösen Schüttung (11) umgeben. Das Hauptrohr (20) weist vorzugsweise auf halber Höhe eines Grundwasserhorizonts einen Querverschluss (21) auf, der in der Mitte eine Öffnung aufweist, in der eine Pumpe (22) angeordnet ist Durch den Querverschluss (21) entsteht in dem Hauptrohr (20) ein oberer und ein unterer Innenraum (24, 25) des Hauptrohres (20). Das Hauptrohr weist in seinem oberen und unteren Teil Durchtrittsöffnungen (23) auf, welche den Einstrom des Grundwassers in das Hauptrohr ermöglichen bzw. den Ausstrom des durch die Pumpe (22) geförderten Wassers.

Die Pumpe (22) fördert das Wasser vorzugsweise in Richtung Erdoberfläche (6), gleichwohl umfasst die Erfindung auch eine Förderung des Wassers in die Tiefe. In den Figuren 1 und 2 ist die Strömungsrichtung des Wassers durch Pfeile dargestellt.

Auf der Höhe des Querverschlusses (21) innerhalb des Hauptrohres ist in der umgebenden porösen Schüttung (11) rund um das Hauptrohr ein dichtendes Material (12) eingebracht, so dass die poröse Schüttung (11) in einen oberen und unteren Teil getrennt wird, welche beide hydraulisch voneinander getrennt sind. Höhe des Querverschlusses bedeutet, dass im Bereich des Querverschlusses die poröse Schüttung hydraulisch unterbrochen ist, wobei das die Unterbrechung verursachende Material eine identische, ähnliche, geringere oder größere Höhe bzw. Dicke aufweisen kann wie der Querverschluss selbst.

Die Erfindung ist nicht auf die in den Abbildungen dargestellten Ausführungsformen beschränkt So können die U-förmig geformten Rohre mit Wärmeträger (30) auch als Platten mit Hohlräumen zum Durchfluss des Wärmeträgers ausgestaltet sein, wobei die Hohlräume bevorzugt wabenförmig ausgestaltet sind.

### Bezugszeichenliste

- 5: Erdreich
- 6: Erdoberfläche
- 10: Bohrung
- 11: poröse Schüttung
- 12: dichtendes Material
- 20: Hauptrohr
- 21: Querverschluss
- 22: Pumpe
- 23: Durchtrittsöffnung
- 24: oberer Innenraum Hauptrohr
- 25: unterer Innenraum Hauptrohr
- 30: Rohr mit Wärmeträger

## Patentansprüche

1. Anlage zur Nutzung von Erdwärme umfassend ein Hauptrohr (20) in einer Bohrung (10) eines Brunnens, wobei
das Durchtrittsöffnungen (23) aufweisende bevorzugt zentral angeordnete Hauptrohr (20) durch einen Querverschluss (21) in einen oberen (24) und einen unteren Teil (25) unterteilt wird und der Querverschluss (21) eine Öffnung aufweist, in der mindestens teilweise eine Vorrichtung, insbesondere eine Pumpe (22) angeordnet ist, die eine Strömung von Grundwasser auslöst und/oder unterstützt und das Hauptrohr (20) bevorzugt mindestens im Bereich der Durchtrittsöffnungen (23), besonders bevorzugt vollständig von einer porösen Schüttung (11) umgeben ist, welche den Raum der Bohrung (10) um das Hauptrohr (20) ausfüllt und die poröse Schüttung (11) durch ein dichtendes Material (12) bevorzugt in Höhe des Querverschlusses (21) hydraulisch unterbrochen ist, **dadurch gekennzeichnet, dass** in dem Raum zwischen dem Hauptrohr (20) und der Bohrung (10) von der Erdoberfläche (6) in die Schüttung (11) verlaufende wärmenutzende Vorrichtungen, bevorzugt Rohre (30), angeordnet sind, in denen ein Wärmeträger zirkuliert und das Hauptrohr (20) in seinem oberen (24) und unteren Teil (25) Durchtrittsöffnungen (23) aufweist, welche den Einstrom von Grundwasser in das Hauptrohr (20) und den Ausstrom des durch die Pumpe (22) geförderten Grundwassers ermöglichen, so dass die Grundwasserströmung die wärmenutzenden Vorrichtungen umspült.

2. Anlage nach Anspruch 1,
**dadurch gekennzeichnet, dass**
die Durchtrittsöffnung (23) als Filterstrecke ausgebildet sind und/oder die Schüttung (11) eine Glasschüttung ist, bevorzugt aus Glaskugeln, insbesondere mit einem Durchmesser von 0,5 bis 10 mm.

3. Anlage nach Anspruch 1,
**dadurch gekennzeichnet, dass**
die wärmenutzende Vorrichtungen Rohre sind, wobei auch thermoelektrische Elemente zur Stromerzeugung verwendet werden.

4. Anlage nach Anspruch 1 oder 3,
**dadurch gekennzeichnet, dass**
in den wärmenutzenden Vorrichtungen als Wärmeträger Wasser oder Sole zirkuliert.

5. Anlage nach Anspruch 1, 3 oder 4,
**dadurch gekennzeichnet, dass**
die wärmenutzende Vorrichtungen Rohre sind, wobei die Rohre mit dem Wärmeträger (30) in der Schüttung (11) oberhalb des Querverschlusses (21) des Hauptrohres (20) angeordnet sind.

6. Anlage nach Anspruch 5,
**dadurch gekennzeichnet, dass**
die Rohre mit dem Wärmeträger (30) in der Schüttung (11) oberhalb und unterhalb der Höhe des Querverschlusses (21) des Hauptrohres (20) angeordnet sind.

7. Anlage nach Anspruch 6,
**dadurch gekennzeichnet, dass**
die Rohre mit Wärmeträger (30) kreisförmig entlang der Außenwand des Hauptrohres (20) angeordnet sind.

8. Anlage nach Anspruch 7,
**dadurch gekennzeichnet, dass**
die Rohre mit Wärmeträger (30) als Platten mit geeigneten Hohlräumen zur Zirkulation des Wärmeträgers ausgebildet sind.

9. Anlage nach Anspruch 1, 5 oder 6,
**dadurch gekennzeichnet, dass**
es sich bei dem porösen Material, welches das Hauptrohr (20) partiell umgibt, um Kies oder bevorzugt um Kugeln, bevorzugt aus Glas, Keramik oder vergleichbarem Material handelt.

10. Anlage nach Anspruch 1 oder 2,
**dadurch gekennzeichnet, dass**
die Durchtrittsöffnungen (23) des Hauptrohrs (20) mit sich nach außen öffnenden Durchlass ausgebildet sind und bevorzugt aus Edelstahl oder PVC bestehen.

11. Anlage nach wenigstens einem der vorherigen Ansprüche,
**dadurch gekennzeichnet, dass**
Rohre, in denen ein Kältemittel zirkuliert und Rohre mit einem Wärmeträger nach Anspruch 6 kombiniert sind.

12. Anlage nach wenigstens einem der vorherigen Ansprüche,
**dadurch gekennzeichnet, dass**
die Zirkulation in den wärmenutzenden Vorrichtungen mit Wärmeträger durch eine Pumpe (22) unterstützt wird.

13. Anlage nach wenigstens einem der vorherigen Ansprüche,
**dadurch gekennzeichnet, dass**
die wärmenutzenden Vorrichtungen aus Polyethylen, Edelstahl, oder Kupfer oder einer Kombination daraus bestehen.

14. Verwendung einer Anlage nach einem der Ansprüche 1 bis 14 zur Gewinnung von Erdwärme.

## Claims

1. System for the use of geothermal heat comprising a main pipe (20) in a borehole (10) of a well, whereby the preferably centrally disposed main pipe (20) with openings (23) is divided by a transverse closure (21) into an upper (24) and a lower part (25) and the transverse closure (21) has an opening in which a device, in particular a pump (22), is at least partially disposed, which device causes and/or supports a flow of ground water and the main pipe (20) preferably at least in the area of the openings (23), is particularly preferably completely surrounded by a porous fill (11), which fills the space of the borehole (10) around the main pipe (20) and the porous fill (11) is hydraulically interrupted by a sealing material (12) preferably at the level of the transverse closure (21), **characterised in that** in the space between the main pipe (20) and the borehole (10) are disposed heat-utilising devices, preferably pipes (30), running from the ground surface (6) into the fill (11), in which devices a heat transfer medium circulates and the main pipe (20) in its upper (24) and lower part (25) has openings (23), which allow the inflow of ground water into the main pipe (20) and the outflow of the groundwater delivered by the pump (22), so that the ground water flow washes around the heat-utilising devices.

2. System in accordance with Claim 1,
**characterised in that**
the openings (23) are formed as a filter section and/or the fill (11) is a glass fill, preferably glass spheres, in particular with a diameter of 0.5 to 10 mm.

3. System in accordance with Claim 1,
**characterised in that**
the heat-utilising devices are pipes, whereby also thermoelectric elements are used to generate electricity.

4. System in accordance with Claim 1 or 3,
**characterised in that**
a heat transfer medium in the form of water or brine circulates in the heat-utilising devices.

5. System in accordance with Claim 1, 3 or 4,
**characterised in that**
the heat-utilising devices are pipes, whereby the pipes with the heat transfer medium (30) are disposed in the fill (11) above the transverse closure (21) of the main pipe (20).

6. System in accordance with Claim 5,
**characterised in that**
the pipes with the heat transfer medium (30) are disposed in the fill (11) above and below the height of the transverse closure (21) of the main pipe (20).

7. System in accordance with Claim 6,
**characterised in that**
the pipes with the heat carrier (30) are disposed circularly along the outer wall of the main pipe (20).

8. System in accordance with Claim 7,
**characterised in that**
the pipes with heat carrier (30) are in the form of plates with suitable voids for the circulation of the heat carrier.

9. System in accordance with Claims 1, 5 or 6,
**characterised in that**
the porous material that partially surrounds the main pipe (20), is gravel or preferably spheres, made preferably of glass, ceramic or comparable material.

10. System in accordance with Claim 1 or 2,
**characterised in that**
the openings (23) of the main pipe (20) are formed as outward opening outlets and made preferably of stainless steel or PVC.

11. System in accordance with at least one of the preceding claims,
**characterised in that**
pipes in which a refrigerant circulates and pipes with a heat transfer medium in accordance with Claim 6 are combined.

12. System in accordance with at least one of the above claims,
**characterised in that**
the circulation in the heat-utilising devices with heat transfer medium is supported by a pump (22).

13. System in accordance with at least one of the preceding claims,
**characterised in that**
the heat-utilising devices consist of polyethylene, stainless steel, or copper or a combination thereof.

14. Use of a system in accordance with one of the Claims 1 to 14 for the extraction of geothermal heat.

## Revendications

1. Installation destinée à l'exploitation de la géothermie, comprenant une conduite principale (20) dans un alésage (10) dans un puits, la conduite principale (20), de préférence en position centrale et présentant des ouvertures de passage (23), étant divisée en une partie supérieure (24) et une partie inférieure (25) par un scellement transversal (21) et le scellement transversal (21) présentant une ouverture, dans laquelle est placé au moins partiellement un dispositif, notamment une pompe (22) qui déclenche et/ou favorise une circulation des eaux souterraines et la conduite principale (20) étant entourée, de préférence au moins dans la zone des ouvertures de passage (23) et au mieux en intégralité, par un déversement poreux (11) remplissant la zone d'alésage (10) autour de la conduite principale (20) et le déversement poreux (11) étant interrompu hydrauliquement par un matériau d'étanchéification (12), de préférence à hauteur du scellement transversal (21), **caractérisée par le fait que** des dispositifs géothermiques passant de la surface du sol (6) jusque dans le déversement (11), sont disposés dans la zone entre la conduite principale (20) et l'alésage (10), de préférence des conduites (30), dans lesquelles circule un fluide caloporteur et dans lesquelles la conduite principale (20) présente, dans sa partie supérieure (24) et sa partie inférieure (25), des ouvertures de passage (23) permettant l'influx des eaux souterraines dans la conduite principale (20) et l'écoulement des eaux souterraines acheminées par la pompe (22) de telle manière à ce que la circulation des eaux souterraines immerge les dispositifs géothermiques.

2. Installation conformément à la revendication n°1,
**caractérisée par le fait que**
les ouvertures de passage (23) sont formées comme sections filtrantes et/ou le déversement (11) est un déversement de verre, de préférence constitué de boules de verre, notamment d'un diamètre de 0,5 à 10 mm.

3. Installation conformément à la revendication n°1,
**caractérisée par le fait que**
les dispositifs géothermiques sont des conduites, les éléments thermoélectriques étant également utilisés pour générer du courant.

4. Installation conformément à la revendication n°1 ou n°3,
**caractérisée par le fait que**
de l'eau ou de la saumure circule dans les dispositifs géothermiques comme fluides caloporteurs.

5. Installation conformément à la revendication n°1, n°3 ou n°4,
**caractérisée par le fait que**
les dispositifs géothermiques sont des conduites, les conduites acheminant un fluide caloporteur (30) étant disposées dans le déversement (11) au-dessus du scellement transversal (21) de la conduite principale (20).

6. Installation conformément à la revendication n°5,
**caractérisée par le fait que**
les conduites acheminant un fluide caloporteur (30) sont disposées dans le déversement (11) au-dessus et au-dessous du niveau du scellement transversal (21) de la conduite principale (20).

7. Installation conformément à la revendication n°6,
**caractérisée par le fait que**
les conduites acheminant un fluide caloporteur (30) sont disposées en cercle le long de la paroi extérieure de la conduite principale (20).

8. Installation conformément à la revendication n°7,
**caractérisée par le fait que**
les conduites acheminant un fluide caloporteur (30) sont constituées comme plaques dotées de cavités appropriées pour la circulation du fluide caloporteur.

9. Installation conformément à la revendication n°1, n°5 ou n°6,
**caractérisée par le fait que**
le matériau poreux qui entoure partiellement la conduite principale (20) est du gravier ou, de préférence, des boules, de préférence en verre, en céramique ou d'un matériau comparable.

10. Installation conformément à la revendication n°1 ou n°2,
**caractérisée par le fait que**
les ouvertures de passage (23) de la conduite principale (20) sont constituées d'un passage ouvert vers l'extérieur et composées, de préférence, d'acier inoxydable ou de PVC.

11. Installation conformément au moins à l'une des revendications précédentes,
**caractérisée par le fait que**
les conduites dans lesquelles circule un réfrigérant et les conduites acheminant un fluide caloporteur sont combinées conformément à la revendication n°6.

12. Installation conformément au moins à l'une des revendications précédentes,
**caractérisée par le fait que**
la circulation dans les dispositifs géothermiques avec fluide caloporteur est favorisée par une pompe (22).

13. Installation conformément au moins à l'une des revendications précédentes,
**caractérisée par le fait que**
les dispositifs géothermiques sont en polyéthylène, en acier inoxydable ou en cuivre ou bien dans une combinaison de ces matériaux.

14. Utilisation d'une installation conformément à l'une des revendications n°1 à n°14 pour l'exploitation de l'énergie géothermique.
